# EUROPEAN PATENT APPLICATION

(11) **EP 1 424 265 A2**
(43) Date of publication of application: **02.06.2004**
(21) Application number: 03425753.5
(22) Date of filing: 24.11.2003
(51) Int. Cl.: B62D 25/06, B62D 31/00

(54) **Shopping space for small cars and other vehicles**

(30) Priority: 28.11.2002 IT NA20020046 U
(71) Applicant: Adami, Benito, 84018 Scafati (IT)
(72) Inventor: Adami, Benito, 84018 Scafati (IT)

(57) **Abstract**

A vehicle, for example a city car or other small car, is provided with a load carrying container as part of the vehicle's roof structure. The interior of the container is accessible from outside the vehicle by means of sliding or pivoting doors provided in the top or sides of the container. The load can thus be conveniently carried without impinging on the boot space or passenger area. Particularly useful for the carrying of shopping.

## Description

It is a closed case, easy of access, to carry out on the top of city cars, mini cars and other vehicles. It allows to people going out for shopping to put inside what they buy.

### AIM

The aim of the invention is to provide the described cars with an independent space for shopping of quick, easy and handy use.

### STATE OF THE ART

Actually, people going out for shopping by car put the things they buy in the boot or in the driver and passenger compartment.

This implies some drawbacks:
- going through the way in order to reach the back of the car;
- keeping the shopping together with the things that usually are in the boot (tools, chains, traction rope, etc.);
- leaving the shopping on the sits in the cabin, blocking up the places for the passengers.

### INNOVATION

The innovation of this invention is in the carrying out of a case to contain the shopping on the top of the described cars as part of the car. It is possible to enter into the container by different ways. We report some of them only as example and not for a complete illustration:
a) by a sliding plane (door) from the back to the front;
b) by two central sliding planes;
c) by two leaves opening upward by a central fulcrum longitudinal (or perpendicular) at the axis of the car;
d) by a vertical lifting plane in the centre;
e) by a single leaf opening upward, from the front or the back;
f) by two side doors.

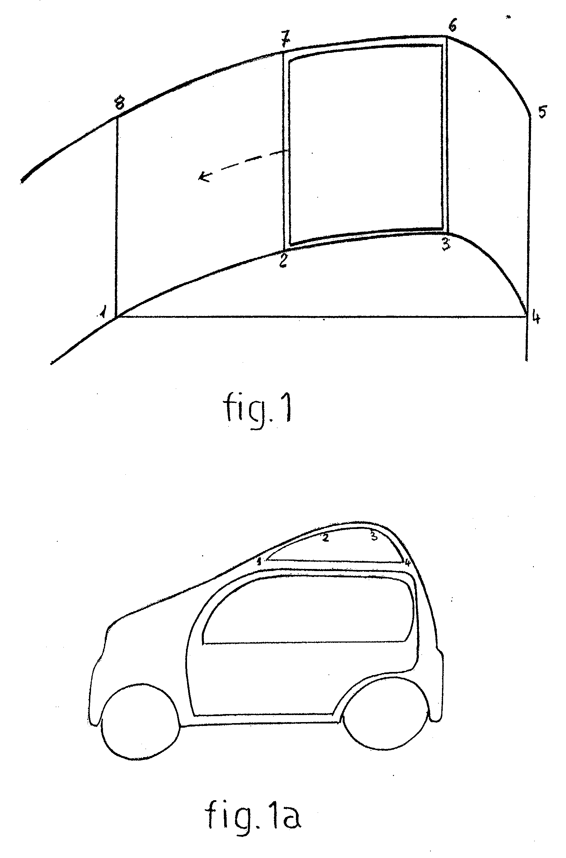

Fig 1 and 1(a), are referred to the suggestion described in the example a);

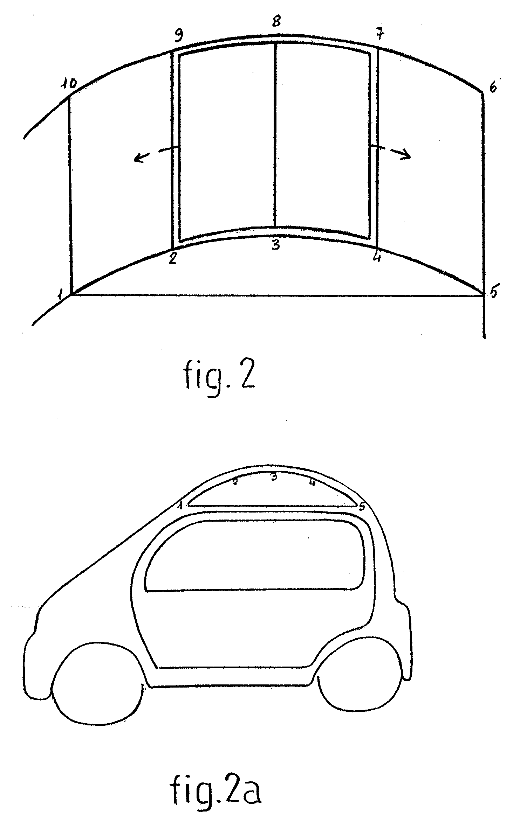

Fig 2 and 2(b), are referred to the suggestion described in the example b);

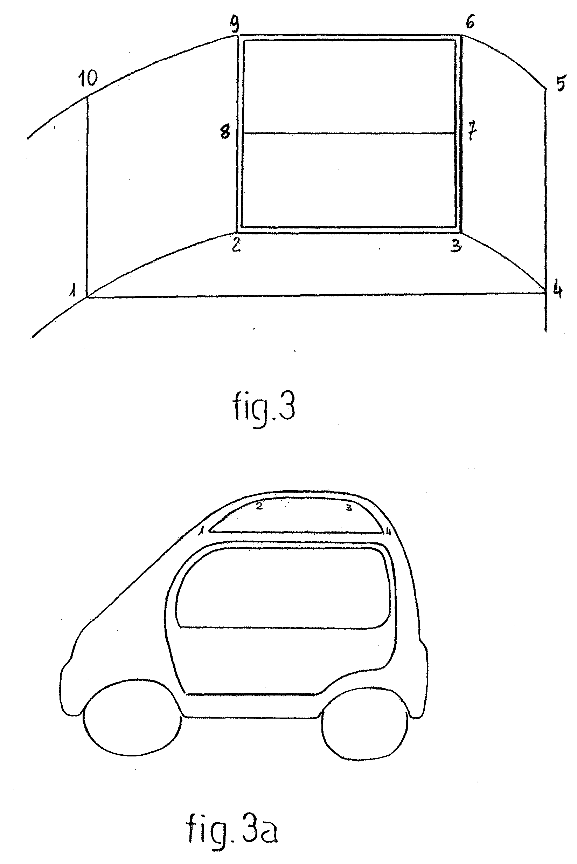

Fig 3 and 3(a), are referred to the suggestion described in the example c).

The planes, the leaves and the doors may be made of metal or other material and may have different shapes. The case may cover the whole surface of the roof of the car or a part of it.

In order to use properly the case, the cars have to be enough high to allow the insert and removal of things with easy and fast movements:
Opening/closing of planes, leaves and doors has to be automatic, for the example by remote control.

### ADVANTAGES

### Getting an independent space for the shopping

The carrying out of the case on the top of the cars allows to use it in a fast and easy way from the both sides of the car and the manage always in safety conditions, in the case of stop on the right of the road as on the left side.

## Claims

1. Case taking shopping, or shopping space, for city cars, mini cars or other vehicles built on their roofs as part of the car. It may take up the whole surface of the roof or part of it and get any form: Fig. 1 (1, 2, 3, 4, 5, 6, 7, 8); Fig.2 (1, 2, 3, 4, 5, 6, 7, 8, 9, 10); Fig.3 (1, 2, 3, 4, 5, 6, 7, 8, 9, 10).
